# EUROPEAN PATENT APPLICATION

(11) **EP 4 699 772 A1**
(43) Date of publication of application: **25.02.2026**
(21) Application number: 25193410.5
(22) Date of filing: 01.08.2025
(51) Int. Cl.: B29B 9/04, B29C 48/04, B29B 17/02, B29B 17/04, B29K 67/00, B29K 105/26, B29K 509/02

(54) **METHOD FOR RECYCLING USED PET FILM, PELLET, AND SLIDING COMPONENT FOR IMAGE FORMING APPARATUS**

(30) Priority: 19.08.2024 JP 2024137817
(71) Applicant: KYOCERA Document Solutions Inc., Osaka-shi, Osaka 540-8585 (JP)
(72) Inventor: TSUJIMOTO, Koichiro, Osaka-shi, Osaka, 540-8585 (JP); UENISHI, Rina, Osaka-shi, Osaka, 540-8585 (JP); MORI, Teruo, Osaka-shi, Osaka, 540-8585 (JP); OKUYAMA, Tomochika, Osaka-shi, Osaka, 540-8585 (JP); OKUNO, Yosuke, Osaka-shi, Osaka, 540-8585 (JP)
(74) Representative: Herrero & Asociados, S.L.

(57) **Abstract**

Provided is a method for recycling a used PET film (100) with ceramic (102) adherent to a surface thereof. The method for recycling a used PET film (100) includes a repelleting step (S2, S13) and a molding step (S3, S14). In the repelleting step (S2, S13), the used PET film is repelleted to make pellets (110). In the molding step (S3, S14), the pellets (110) made in the repelleting step (S2, S13) are used to form a resin molded product (120).

## Description

### BACKGROUND

The present invention relates to methods for recycling used PET films with ceramic adherent to their surfaces, pellets, and sliding components for image forming apparatuses.

Recently, recycle or reuse of materials is being demanded as a measure to save environmental resources. For example, a PET film is used as a carrier film in an intermediate process of production of multi-layer electronic components, such as multi-layer ceramic capacitors, and furthermore, the used PET film is demanded to be recycled or reused. For example, there is a method for recycling a used PET film by cleaning foreign materials adhering to the surface of a used PET film with a cleaning liquid containing an organic solvent and removing the cleaning liquid adhering to the PET film to remake the used PET film into a new PET film.

### SUMMARY

A technique improved over the aforementioned technique is proposed as one aspect of the present invention.

A method for recycling a used PET film according to an aspect of the present invention is a method for recycling a used PET film with ceramic adherent to a surface thereof. The method for recycling a used PET film includes a repelleting step and a molding step. In the repelleting step, the used PET film is repelleted to make pellets. In the molding step, the pellets made in the repelleting step are used to form a resin molded product.

A pellet according to another aspect of the present invention is a pellet made using a used PET film with ceramic adherent to a surface thereof. The pellet is made by repelleting the used PET film.

A sliding component for an image forming apparatus according to still another aspect of the present invention is a sliding component produced using a used PET film with ceramic adherent to a surface thereof. The used PET film contains at least PET and silicon resin. The sliding component for an image forming apparatus is molded using pellets. The pellets are made by repelleting the used PET film after the ceramic adherent to the surface of the used PET film has been mechanically removed with the silicon resin left in the used PET film.

### BRIEF DESCRIPTION OF THE DRAWINGS

FIG. 1A is a view showing part of the summary of a production process of multi-layer ceramic capacitors for the purpose of illustrating that ceramic adheres to a surface of a used PET film for use in a method for recycling a used PET film according to a first embodiment of the present invention.
FIG. 1B is a view showing another part of the summary of the production process of multi-layer ceramic capacitors.
FIG. 1C is a view showing still another part of the summary of the production process of multi-layer ceramic capacitors.
FIG. 1D is a view showing still another part of the summary of the production process of multi-layer ceramic capacitors.
FIG. 2 is a flowchart showing the steps of the method for recycling a used PET film according to the first embodiment.
FIG. 3A is a view schematically showing a product or the like in a step of the method for recycling a used PET film in FIG. 2.
FIG. 3B is a view schematically showing a product or the like in a step of the method for recycling a used PET film in FIG. 2.
FIG. 3C is a view schematically showing a product or the like in a step of the method for recycling a used PET film in FIG. 2.
FIG. 4 is a flowchart showing the steps of a method for recycling a used PET film according to a second embodiment of the present invention.
FIG. 5A is a view schematically showing a product or the like in a step of the method for recycling a used PET film in FIG. 4.
FIG. 5B is a view schematically showing a product or the like in a step of the method for recycling a used PET film in FIG. 4.
FIG. 5C is a view schematically showing a product or the like in a step of the method for recycling a used PET film in FIG. 4.
FIG. 5D is a view schematically showing a product or the like in a step of the method for recycling a used PET film in FIG. 4.
FIG. 6 is a view for illustrating a mechanism for removing ceramic adherent to a surface of a used PET film from the used PET film in a ceramic removal step in FIG. 4.

### DETAILED DESCRIPTION

Hereinafter, a description will be given of a method for recycling a used PET film according to embodiments as aspects of the present invention with reference to the drawings.

### <<First Embodiment>>

A description will be given below of a method for recycling a used PET film according to a first embodiment of the present invention with reference to the drawings.

First, a used PET film with ceramic adherent to a surface thereof will be described.

A PET film is used, for example, in an intermediate process of production of multi-layer electronic components, such as multi-layer ceramic capacitors. When a PET film is used in an intermediate process of production of multi-layer electronic components, ceramic adheres to a surface of the PET film. The multi-layer electronic components are removed from the PET film in the intermediate process of the production thereof and, thus, the used PET film with ceramic left on and adhering to the surface thereof becomes an object to be recycled.

The PET film has, for example, an elongated shape and contains at least PET (polyethylene terephthalate) and silicon resin. For example, the content of PET in the PET film is 98% and the content of silicon resin in the PET film is 2% or less. The used PET film is a PET film after being used in producing multi-layer electronic components and the ceramic is left on and adheres to the surface of the used PET film.

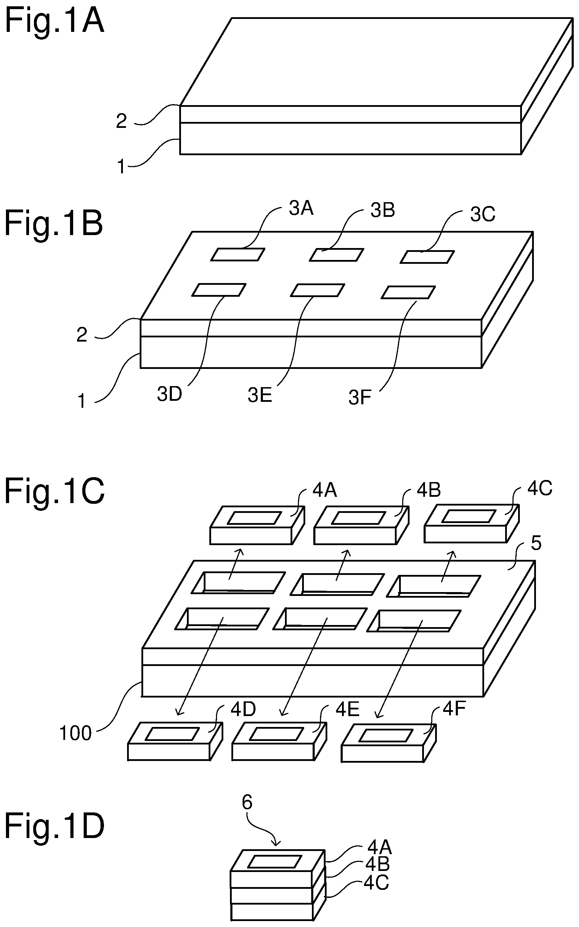

Subsequently, a description will be given of how ceramic adheres to a surface of a PET film with reference to FIGS. 1A to 1D. FIG. 1A is a view showing part of the summary of a production process of multi-layer ceramic capacitors for the purpose of illustrating that ceramic adheres to a surface of a used PET film for use in a method for recycling a used PET film. FIG. 1B is a view showing another part of the summary of the production process of multi-layer ceramic capacitors. FIG. 1C is a view showing still another part of the summary of the production process of multi-layer ceramic capacitors. FIG. 1D is a view showing still another part of the summary of the production process of multi-layer ceramic capacitors.

A PET film 1 has, for example, an elongated shape, contains at least PET and silicon resin, and includes a base film and a releasable layer formed on one surface of the base film. The base film contains PET and the releasable layer contains silicon resin. Since the releasable layer contains silicon resin, it can be a releasable layer having excellent mold releasability and can reduce the amount of ceramic residue remaining on a surface of the releasable layer after a ceramic green sheet to be described hereinafter is removed therefrom.

As shown in FIG. 1A, a slurry containing dielectric ceramic powder, a binder, an organic solvent, and so on is applied in the shape of a sheet to a surface of a releasable layer constituting part of a PET film 1 by the doctor blade method or other methods and the organic solvent component is then dried off from the slurry, thus obtaining a ceramic green sheet 2 on the PET film 1. The material for the binder is, for example, polyvinyl butyral resin (PVB). The material for the organic solvent is, for example, ethanol or toluene.

Subsequently, as shown in FIG. 1B, an electrode paste containing, for example, nickel, is screen printed on a surface of the ceramic green sheet 2 to form electrode patterns 3A to 3F thereon. For the sake of simplifying the drawings, each electrode pattern 3A to 3F in FIGS. 1B to 1D is shown as a rectangle.

The ceramic green sheet 2 with the electrode patterns 3A to 3F formed is cut into rectangle pieces and the cut rectangular pieces are peeled off from the PET film 1, thus forming parts 4A to 4F (single-layered parts) for multi-layer ceramic capacitors as shown in FIG. 1C.

Furthermore, when the cut rectangular pieces are peeled off form the PET film 1, the rest 5 of the ceramic green sheet 2 is left on the used PET film 100 as shown in FIG. 1C. In this manner, the used PET film 100 with ceramic adherent to the surface is formed.

A predetermined number of single-layered parts for each multi-layer ceramic capacitor are layered. For example, as shown in FIG. 1D, three single-layered parts 4A to 4C for a multi-layer ceramic capacitor are layered as the predetermined number of single-layered parts and an electrode pattern is formed on the outside surface of a laminate consisting of the layered single-layered parts, thus producing a multi-layer ceramic capacitor 6.

The used PET film with ceramic adherent to the surface in the above manner is merely illustrative. In this embodiment, regardless of how ceramic adheres to a surface of a used PET film, a used PET film with ceramic adherent to a surface thereof is an object to be recycled.

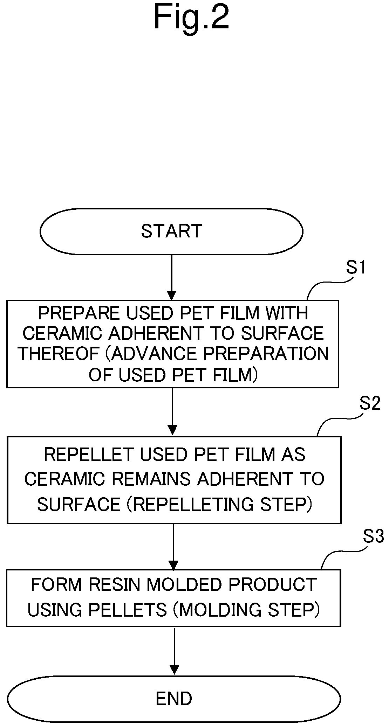

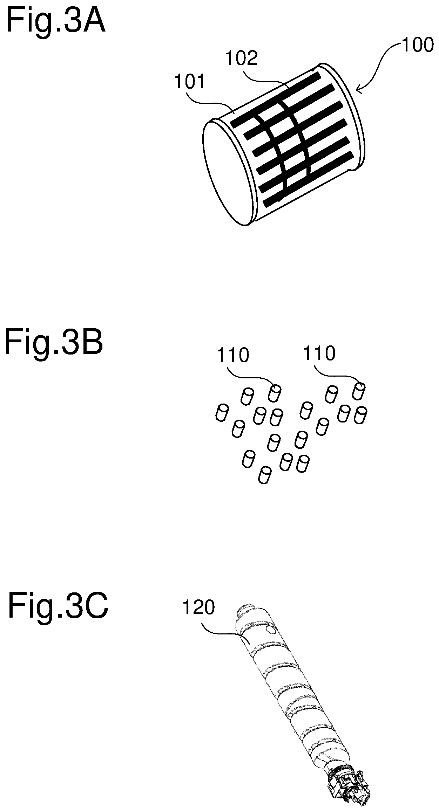

Subsequently, a description will be given of the steps of a method for recycling a used PET film with ceramic adherent to a surface thereof with reference to FIGS. 2 and 3A to 3C. FIG. 2 is a flowchart showing the steps of the method for recycling a used PET film according to the first embodiment. FIG. 3A is a view schematically showing a product or the like in a step of the method for recycling a used PET film in FIG. 2. FIG. 3B is a view schematically showing a product or the like in a step of the method for recycling a used PET film in FIG. 2. FIG. 3C is a view schematically showing a product or the like in a step of the method for recycling a used PET film in FIG. 2.

First, a used PET film with ceramic adherent to a surface thereof is prepared (ADVANCE PREPARATION OF USED PET FILM: step S1). In a used PET film 100 containing at least PET and silicon resin and prepared in ADVANCE PREPARATION OF USED PET FILM in step S1, ceramic 102 adheres to a surface 101 of the used PET film 100 as shown by appearance in FIG. 3A. In FIG. 3A, the PET film 100 is shown in a rolled state.

The used PET film 100 prepared in ADVANCE PREPARATION OF USED PET FILM in step S1 is repelleted to make pellets (REPELLETING STEP: step S2). In the repelleting step in the first embodiment, the used PET film 100 is repelleted as ceramic remains adherent to its surface. In the repelleting processing, for example, the used PET film 100 with ceramic adherent to the surface is ground into pieces of a size loadable into a known extruder (having a known structure and capable of doing known operations) by a known grinder (having a known structure and capable of doing know operations) and ground pieces obtained by grinding with the known grinder are loaded into the known extruder and melted by heat and made into pellets of an easily processable size in the extruder. The repelleting step in the first embodiment is characterized in that a used PET film 100 with ceramic adherent to a surface thereof is used as a material. A known method can be used in the repelleting processing. In the repelleting step of step S2, pellets 110 shown in FIG. 3B are produced.

Using the pellets produced in the repelleting step, a resin molded product is formed (MOLDING STEP: step S3). Examples of a method for forming a resin molded product include known injection molding and known blow molding. Injection molding is a molding method in which, for example, resin melted by heat is injected and filled into a mold consisting of male and female halves at high temperature and high pressure and then cooled to solidify it. Blow molding is also called hollow molding and is a molding method in which, for example, resin melted by heat is extruded in a pipe shape (called a parison), the parison in a molten state is sandwiched between opposed concave halves of a mold, compressed air or the like is blown into the inside of the molten parison to inflate the parison until the parison sticks to the inside surface of the mold, and the inflated parison is then cooled to solidify it. Alternatively, a resin molded product may be formed in the following manner. Resin melted by heat is injected and filled into a mold at high temperature and high pressure and then cooled to solidify it and thus mold a preform (injection molding), the preform melted by heat is sandwiched between the halves of a mold, compressed air or the like is blown into the inside of the molten preform to inflate the preform until the molten preform sticks to the inside surface of the mold, and the inflated preform is then cooled to solidify it (blow molding), thus forming a resin molded product. For example, a toner container bottle 120 shown by appearance in FIG. 3C is produced in the molding step of step S3 in which injection molding and subsequent blow molding are performed. The toner container bottle 120 is a slidability-requiring resin molded product including a component that requires slidability, such as a gear. The toner container bottle 120 is a sliding component for an image forming apparatus. The toner container bottle 120 is merely an example of a sliding component for an image forming apparatus and a resin molded product formed in the molding step of step S3 may be, for example, a sliding component for an image forming apparatus other than the toner container bottle 120. A resin molded product formed in the molding step of step S3 may be, for example, a sliding component for a product other than an image forming apparatus, a component other than a sliding component for an image forming apparatus, a component other than a sliding component for a product other than an image forming apparatus, or a product.

Since, in the first embodiment described above, a used PET film is repelleted to make pellets and the pellets are used to form a resin molded product, the scope of recycling application of a used PET film with ceramic adherent to a surface thereof can be extended to various resin molded products other than a PET film.

Furthermore, since a used PET film is repelleted as ceramic remains adherent to a surface thereof, the number of steps from the preparation of the used PET film with ceramic adherent to the surface to the making of pellets is small. Therefore, the pellets can be made at low cost from the used PET film with ceramic adherent to the surface and, thus, the production cost of a resin molded product formed using the pellets can be reduced.

In addition, since the pellets used in the molding step of step S3 contain, in addition to PET, silicon resin, ceramic, and so on, a resin molded product formed using the pellets becomes clouded. In coloring the clouded resin molded product, the amount of colorant used can be reduced as compared with the case where a clear resin molded product is colored, which enables cost reduction in coloring when a resin molded product needs to be colored.

### <<Second Embodiment>>

A description will be given below of a method for recycling a used PET film according to a second embodiment of the present invention with reference to the drawings. Although in the method for recycling a used PET film according to the first embodiment a used PET film is repelleted as ceramic remains adherent to a surface thereof, the method for recycling a used PET film according to the second embodiment is different from the above method in that a used PET film is repelleted after ceramic adherent to a surface thereof has been removed.

In the second embodiment, like the first embodiment, a used PET film with ceramic adherent to a surface thereof is an object to be recycled. The PET film has, for example, an elongated shape and contains at least PET and silicon resin. For example, the content of PET in the PET film is 98% and the content of silicon resin in the PET film is 2% or less. The used PET film is a PET film after being used in producing multi-layer electronic components and the ceramic is left on and adheres to the surface of the used PET film.

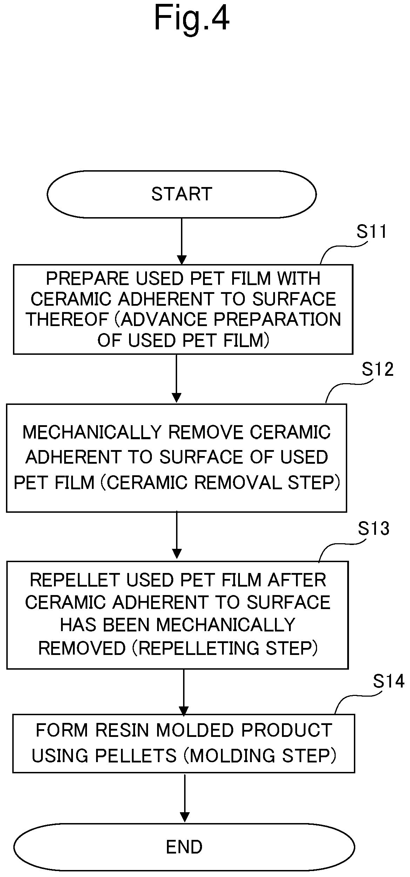

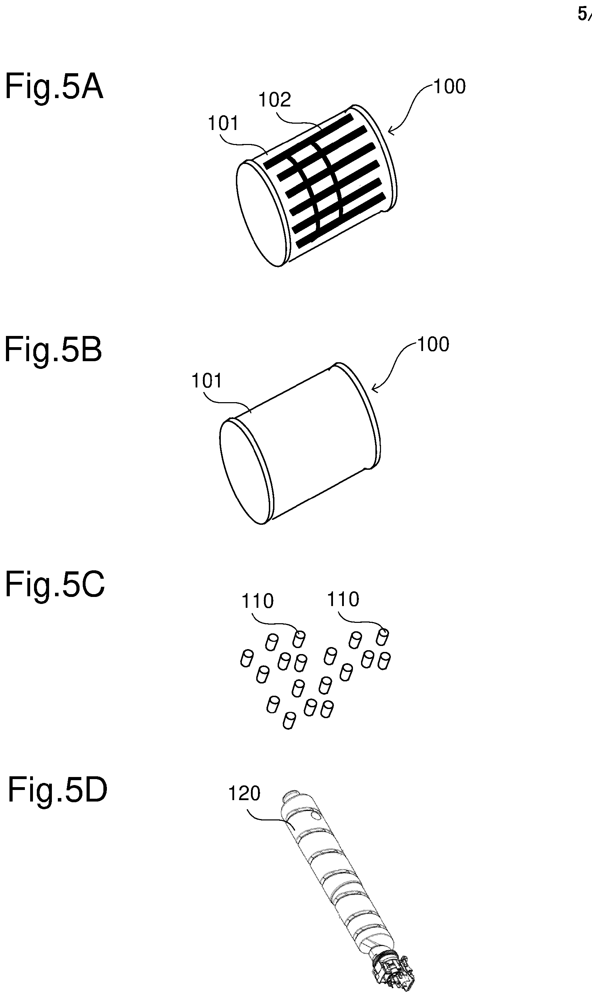

Subsequently, a description will be given of the steps of a method for recycling a used PET film with ceramic adherent to a surface thereof with reference to FIGS. 4 and 5A to 5D. FIG. 4 is a flowchart showing the steps of the method for recycling a used PET film according to the second embodiment. FIG. 5A is a view schematically showing a product or the like in a step of the method for recycling a used PET film in FIG. 4. FIG. 5B is a view schematically showing a product or the like in a step of the method for recycling a used PET film in FIG. 4. FIG. 5C is a view schematically showing a product or the like in a step of the method for recycling a used PET film in FIG. 4. FIG. 5D is a view schematically showing a product or the like in a step of the method for recycling a used PET film in FIG. 4.

First, a used PET film with ceramic adherent to a surface thereof is prepared (ADVANCE PREPARATION OF USED PET FILM: step S11). In a used PET film 100 containing at least PET and silicon resin and prepared in ADVANCE PREPARATION OF USED PET FILM in step S11, ceramic 102 adheres to a surface 101 of the used PET film 100 as shown by appearance in FIG. 5A.

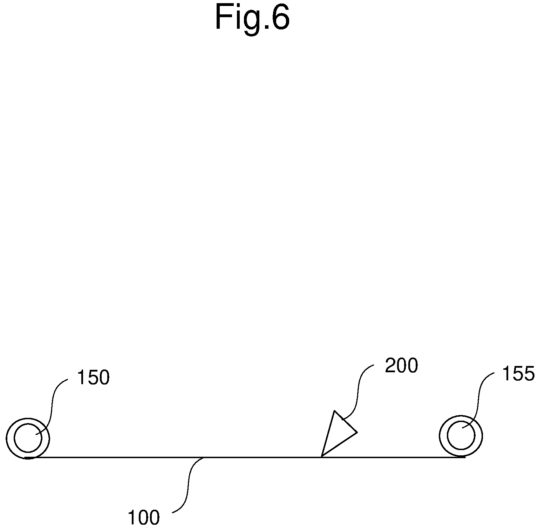

The ceramic adherent to the surface of the used PET film is mechanically removed from the used PET film (CERAMIC REMOVAL STEP: step S12). For example, in the ceramic removal step of step S12, as shown in FIG. 6, the used PET film 100 is taken out by rollers 150, 155 and then rewound by the roller 150, 155 while a blade 200 is allowed to make contact with the surface 101 to which ceramic 102 adheres. Thus, while the used PET film 100 is rewound, the blade 200 continues to make contact with the ceramic 102 adherent to the surface 101 of the used PET film 100 and scrapes off the ceramic 102 from the surface 101 of the used PET film 100. However, the mechanism for use to mechanically remove ceramic adherent to the surface of the used PET film from the surface of the used PET film is not particularly limited. By the ceramic removal step of step S12, the used PET film 100 with ceramic 102 adherent to the surface 101 shown by appearance in FIG. 5A is turned into a used PET film 100 from which the ceramic 102 adherent to the surface 101 has been removed, as shown by appearance in FIG. 5B.

In the ceramic removal step (step S12), silicon resin contained in the used PET film is left therein and the ceramic adherent to the surface of the used PET film is mechanically removed.

The used PET film after ceramic adherent to the surface thereof has been mechanically removed in the ceramic removal step (step S12) is repelleted to make pellets (REPELLETING STEP: step S13). The repelleting step in the second embodiment is characterized in that a used PET film after ceramic adherent to a surface thereof has been removed is used as a material. A known method can be used in the repelleting processing. In the repelleting step of step S13, pellets 110 shown in FIG. 5C are produced.

As described previously, in the first embodiment, pellets are made by repelleting a used PET film as ceramic remains adherent to its surface. On the other hand, in the second embodiment, pellets are made by repelleting a used PET film after ceramic adherent to its surface has been removed.

Using the pellets produced in the repelleting step, a resin molded product is formed (MOLDING STEP: step S14). The method for forming a resin molded product is the same as in the first embodiment. For example, a toner container bottle 120 shown by appearance in FIG. 5D is produced in the molding step of step S14 in which injection molding and subsequent blow molding are performed. The toner container bottle 120 is a slidability-requiring resin molded product including a component (for example, a gear) that requires slidability. The toner container bottle 120 is a sliding component for an image forming apparatus. The toner container bottle 120 is merely an example of a sliding component for an image forming apparatus and a resin molded product formed in the molding step of step S14 may be, for example, a sliding component for an image forming apparatus other than the toner container bottle 120. A resin molded product formed in the molding step of step S14 may be, for example, a sliding component for a product other than an image forming apparatus, a component other than a sliding component for an image forming apparatus, a component other than a sliding component for a product other than an image forming apparatus, or a product.

Since, in the second embodiment described above, a used PET film is repelleted to make pellets and the pellets are used to form a resin molded product, the scope of recycling application of a used PET film with ceramic adherent to a surface thereof can be extended to various resin molded products other than a PET film.

Furthermore, the process from the preparation of a used PET film with ceramic adherent to a surface thereof to the making of pellets is designed to include: a ceramic removal step (step S12) of mechanically removing the ceramic adherent to the surface of the used PET film from the used PET film; and a repelleting step (step S13) of repelleting the used PET film after ceramic adherent to the surface thereof has been mechanically removed and thus making pellets. Therefore, the pellets can be made at low cost from the used PET film with ceramic adherent to the surface and, thus, the production cost of a resin molded product formed using the pellets can be reduced.

In addition, by performing the ceramic removal step of removing ceramic adherent to the surface of the used PET film from the used PET film before the repelleting step, the content of components other than PET in the pellets can be reduced. Therefore, the curing speed of PET or the like can be lower than with the use of pellets made from the used PET film with ceramic adherent to the surface thereof and, thus, pellets suitable for blow molding performed in producing a resin molded product can be provided.

Furthermore, by mechanically doing the removal of ceramic adherent to a surface of a used PET film, the removal of ceramic can be easily achieved. For example, if ceramic adherent to a surface of a used PET film is chemically removed using an organic solvent or the like, the work for decontaminating the organic solvent or the like is necessary in order to avoid adverse effects of the organic solvent on the environment and the burden of the work is large. Unlike this, mechanical removal of ceramic adherent to a surface of a used PET film requires no special work except for the removal of ceramic and, therefore, the work burden is small.

In addition, in the ceramic removal step, silicon resin contained in the used PET film is left therein and the ceramic adherent to the surface of the used PET film is mechanically removed. Therefore, silicon resin contained in the used PET film is also contained in a resin molded product, for which reason this method is a method for recycling a used PET film suitable for a resin molded product requiring mold releasability and a resin molded product requiring slidability (for example, a gear).

Furthermore, since the pellets used in the molding step of step S14 contain, in addition to PET, silicon resin and so on, a resin molded product formed using the pellets becomes clouded. In coloring the clouded resin molded product, the amount of colorant used can be reduced as compared with the case where a clear resin molded product is colored, which enables cost reduction in coloring when a resin molded product needs to be colored.

For example, there is a method for recycling a used PET film by cleaning foreign materials adhering to the surface of a used PET film with a cleaning liquid containing an organic solvent and removing the cleaning liquid adhering to the PET film to remake the used PET film into a new PET film. However, this method for recycling a used PET film limits the recycling application of used PET film to the use as a new PET film and, therefore, narrows the scope of recycling application of used PET film. In contrast, in the above embodiments, the scope of recycling application of a used PET film with ceramic adherent to a surface thereof can be further extended at low cost.

The present invention is not limited to the structures and configurations of the above embodiments and modifications and can be modified in various ways. Furthermore, the structures, configurations, and steps described in the first embodiment with reference to FIGS. 1 to 3 and the structures, configurations, and steps described in the second embodiment with reference to FIGS. 4 to 6 are merely illustrative of the present invention and are not intended to limit the present invention to them.

## Claims

1. A method for recycling a used PET film (100) with ceramic (102) adherent to a surface thereof, the method comprising:
a repelleting step (S2, S13) of repelleting the used PET film (100) to make pellets (110); and
a molding step (S3, S14) of using the pellets (110) made in the repelleting step (S2, S13) to form a resin molded product (120).

2. The method for recycling a used PET film (100) according to claim 1, wherein in the repelleting step (S2) the used PET film (100) is repelleted as the ceramic (102) remains adherent to the surface of the used PET film (100).

3. The method for recycling a used PET film (100) according to claim 1,
further comprising a ceramic removal step (S12) of mechanically removing the ceramic (102) adherent to the surface of the used PET film (100) from the used PET film (100) before the repelleting step (S13),
wherein in the repelleting step (S13) the used PET film (100) after the ceramic (102) adherent to the surface thereof has been removed is repelleted.

4. The method for recycling a used PET film (100) according to claim 3, wherein
the used PET film (100) contains at least PET and silicon resin, and
in the ceramic removal step (S12), the ceramic (102) adherent to the surface of the used PET film (100) is mechanically removed with the silicon resin left in the used PET film (100).

5. The method for recycling a used PET film (100) according to claim 4, wherein the resin molded product requires slidability.

6. The method for recycling a used PET film (100) according to claim 1, wherein in the molding step (S3, S14) injection molding or blow molding is used.

7. A pellet (110) made using a used PET film (100) with ceramic (102) adherent to a surface thereof, the pellet (100) being made by repelleting the used PET film.

8. The pellet (110) according to claim 7, made by repelleting the used PET film (100) as the ceramic (102) remains adherent to the surface of the used PET film (100).

9. The pellet (110) according to claim 7, made by repelleting the used PET film (100) after the ceramic (102) adherent to the surface of the used PET film (100) has been mechanically removed.

10. A sliding component (120) for an image forming apparatus, the sliding component (120) being produced using a used PET film (100) with ceramic (102) adherent to a surface thereof,
wherein the used PET film (100) contains at least PET and silicon resin, and
the sliding component (120) is molded using pellets (110) made by repelleting the used PET film (100) after the ceramic (102) adherent to the surface of the used PET film (100) has been mechanically removed with the silicon resin left in the used PET film (100).
